(19) Europäisches Patentamt
European Patent Office
Office européen des brevets

(11) **EP 2 972 476 B1**

(12) **EUROPÄISCHE PATENTSCHRIFT**

(45) Veröffentlichungstag und Bekanntmachung des Hinweises auf die Patenterteilung:
**01.05.2024 Patentblatt 2024/18**

(21) Anmeldenummer: **14717677.0**

(22) Anmeldetag: **11.03.2014**

(51) Internationale Patentklassifikation (IPC):
**G01S 13/93** (2020.01)  **G01S 13/42** (2006.01)
**G01S 7/02** (2006.01)  **G01S 7/41** (2006.01)

(52) Gemeinsame Patentklassifikation (CPC):
**G01S 7/026; G01S 7/41; G01S 13/42;
G01S 13/931; H01Q 1/3233; H01Q 3/2605;
H01Q 13/0266; H01Q 13/065; H01Q 15/244;
H01Q 21/064**

(86) Internationale Anmeldenummer:
**PCT/EP2014/054665**

(87) Internationale Veröffentlichungsnummer:
**WO 2014/139992 (18.09.2014 Gazette 2014/38)**

(54) **POLARIMETRISCHES RADAR ZUR OBJEKTKLASSIFIKATION SOWIE GEEIGNETES VERFAHREN UND GEEIGNETE VERWENDUNG HIERFÜR**

POLARIMETRIC RADAR FOR OBJECT CLASSIFICATION AND SUITABLE METHOD AND SUITABLE USE THEREFOR

RADAR POLARIMÉTRIQUE POUR LA CLASSIFICATION D'OBJETS, AINSI QUE PROCÉDÉ ADAPTÉ ET APPLICATION ADAPTÉE ASSOCIÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2013 DE 102013102424**

(43) Veröffentlichungstag der Anmeldung:
**20.01.2016 Patentblatt 2016/03**

(73) Patentinhaber: **ASTYX GmbH
85521 Ottobrunn (DE)**

(72) Erfinder: **TRUMMER, Stefan
82024 Taufkirchen (DE)**

(74) Vertreter: **Berkenbrink, Kai-Oliver
Patentanwälte Becker & Müller
Turmstrasse 22
40878 Ratingen (DE)**

(56) Entgegenhaltungen:
EP-A1- 2 230 533   JP-A- H0 784 042
US-A1- 2004 178 943   US-A1- 2008 100 510
US-A1- 2011 102 238   US-A1- 2012 274 499
US-A1- 2013 278 457

- **ALEXIS PAOLO GARCIA ARIZA ET AL: "60 GHz Polarimetric MIMO Sensing: Architectures and Technology", 6TH EUROPEAN CONFERENCE ON ANTENNAS AND PROPAGATION (EUCAP), 2012, 30. März 2012 (2012-03-30), Seiten 2578-2585, XP055125936, DOI: 10.1109/EuCAP.2012.6206544 ISBN: 978-1-45-770918-0**
- **GUIMEI ZHENG ET AL: "Angle and polarization estimation using ESPRIT with polarimetric MIMO radar", IET INTERNATIONAL CONFERENCE ON RADAR SYSTEMS (RADAR 2012), 25. Oktober 2012 (2012-10-25), Seiten 1-4, XP055125945, DOI: 10.1049/cp.2012.1575**

**Beschreibung**

Die vorliegende Erfindung betrifft ein polarimetrisches Radar zur Objektklassifikation nach dem Oberbegriff des Anspruchs 1 und ein geeignetes Verfahren und eine geeignete Verwendung hierfür.

Zur Reduzierung der Anzahl von Verkehrsunfällen im Straßenverkehr werden vermehrt Fahrerassistenzsysteme eingesetzt. Die aktuell eingebauten ACC (Adaptive Cruise Control) Systeme sind Komfortsysteme zur automatischen Geschwindigkeitsregelung, welche diese je nach Abstand und Relativgeschwindigkeit zwischen vorausfahrenden und eigenen Fahrzeug regeln. Für künftige Fahrzeuge werden die Radargeräte für Fahrerassistenzsysteme nicht mehr als Komfortsystem sondern als sicherheitskritisch vom Automobilhersteller eingestuft, um z.B. zur Vermeidung eines Auffahrunfalls durch den Bremsassistenten eine Vollbremsung durchführen zu können, nachdem der Fahrer das Bremspedal nicht oder zu spät betätigt. Hierfür besitzen die aktuell in Serienfahrzeugen verbauten Radargeräte für Fahrerassistenzsysteme jedoch einen funktionalen Nachteil. Unabhängig vom Objekt wird ein Signal entsprechend dem Radarrückstreuquerschnitt empfangen, ohne auf die physikalischen Abmessungen und Art des Objekts schließen zu können. Auch lässt der Wert des Radarrückstreuquerschnitts nicht auf Art und Zielgröße schließen, da dieser stark vom Betrachtungswinkel abhängt. Die zuverlässige Klassifikation der Objekte nach den Kategorien LKW, PKW, Motorrad/Fahrrad, Fußgänger sowie Falschziele (Gullydeckel, Brückengeländer, usw.) zur Aktivierung des Bremsassistenten ist daher ungelöst. Eine weitere Herausforderung besteht in der funktionalen Verbesserung aktueller Systeme hinsichtlich Fading (Mehrfachreflexionen und dadurch Geisterziele) und Beeinflussung durch Gischt verursacht durch vorausfahrende oder im Überholvorgang befindliche Fahrzeuge.

Die bisherigen Radargeräte für Fahrerassistenzsysteme verwenden linear polarisierte Wellen. Beispielsweise beschreibt US 2012/274499 A1 ein MIMO-Radarbildgebungsverfahren, das die Vorteile von Messtechniken für Raumfrequenzkomponenten eines HF-Flächenbildes aus Radarrückläufen nutzt. Um Größe, Gewicht und Leistung (SW & P) zu minimieren, werden Arrays mit minimaler Redundanz (MRAs) für Tx und Rx mit eindeutigen Geometrien vorgeschlagen. EP 2 230 533 A1 beschreibt ein Verfahren zur dreidimensionalen Abbildung einer Gebäudestruktur. Das Verfahren umfasst die Schritte des Sendens von einer oder mehreren Positionen außerhalb eines Gebäudes, wobei eine Wand das Radarsignal in Richtung des Gebäudes durchdringt. Alexis Paolo Garcia Ariza et al.: "60 GHz Polarimetrie MIMO Sensing: Architectures and Technology", 6th European Conference on Antennas and Propagation, 30. März 2012, Seiten 2578-2585 beschreibt eine polarimetrische 60-GHz-MIMO-Systemarchitektur, die analoge miniaturisierte Frontends enthält, die mit mehrschichtigen Verpackungstechnologien entworfen und hergestellt wurden. US 2004/178943 A1 beschreibt ein Verfahren zur Geländekartierung und/oder Hinderniserkennung für Flugzeuge, mit den Schritten des Sendens eines nicht abtastenden Strahls, der das Gelände und/oder Hindernisse beleuchtet; Empfangen eines Dopplerverschobenen Signals, das eine Doppler-Frequenzverschiebung um einen Betrag ist, der von einem Winkel zwischen einer Fluglinie des Flugzeugs und Streuern abhängt, die den durchgelassenen Strahl reflektiert. Guimei Zheng et al.: "Angle and polarization estimation using ESPRIT with polarimetric MIMO radar", IET International Conference on Radar Systems, 25. Oktober 2012, Seiten 1-4 beschreibt ein monostatisches polarimetrisches MIMO-Radar, das mit mehreren Sendeantennen und mehreren polarisationsempfindlichen Empfangsantennen konfiguriert ist. US 2011/102238 A1 beschreibt eine integrierte Radarvorrichtung, die eine Übertragungswellenerzeugungseinheit umfasst, die zum Erzeugen einer Übertragungswelle konfiguriert ist, eine vertikal polarisierte Wellenübertragungsantenne, die zum vertikalen Polarisieren und Senden der Übertragungswelle konfiguriert ist, eine horizontal polarisierte Wellenübertragungsantenne, die zum horizontalen Polarisieren und Übertragen der Übertragungswelle konfiguriert ist, eine Empfangsantenne, die zum Empfangen einer Reflexionswelle konfiguriert ist, eine Schaltsteuereinheit, die konfiguriert ist, um ein Umschalten zwischen der Sendeantenne mit vertikal polarisierten Wellen und der Sendeantenne mit horizontal polarisierten Wellen durchzuführen, und eine Empfangseinheit, die konfiguriert ist, um eine der Reflexionswellen basierend auf Empfangspegeln von zu empfangen. US 2013/278457 A1 beschreibt eine Richtungserfassungsvorrichtung, die Antennen einer Vielzahl von Systemen mit Polarisationseigenschaften umfasst, die sich voneinander unterscheiden und konfiguriert sind, um ein von einem Objekt reflektiertes Signal zu empfangen. US 2008/100510 A1 beschreibt ein Antennensystem für einen Detektor. Das Antennensystem umfasst ein zweidimensionales elektromagnetisches Senderarray mit einer x-Anzahl von Senderelementen und ein zweidimensionales elektromagnetisches Empfängerarray mit einer y-Anzahl von Empfängerelementen.

Eine Aufgabe der vorliegenden Erfindung ist die Vermeidung der bekannten Nachteile. Eine weitere Aufgabe ist eine vereinfachte, zuverlässige und/oder präzise Objektklassifikation anhand eines polarimetrischen Radars.

Gelöst werden diese Aufgaben mit den Merkmalen des Anspruchs 1, 9 oder 13.

Anmeldungsgemäß ist ein polarimetrisches DBF (Digital Beamforming)Automobilradar vorgesehen, das neben der Entfernungs- und Geschwindigkeitsinformation Oberflächenstrukturen und Reflexionsschwerpunkte an den verschiedenen Objekten eindeutig detektieren und klassifizieren kann, um die Art und physikalischen Abmaße des Objektes bestimmen zu können. Hierfür wird eine zirkular polarisierte Welle (entweder links- oder rechtsdrehend oder abwechselnd links- und rechtsdrehend) abgestrahlt und gleichzeitig sowohl der am Objekt reflektierte linksals auch rechtsdrehende Anteil der Welle empfangen.

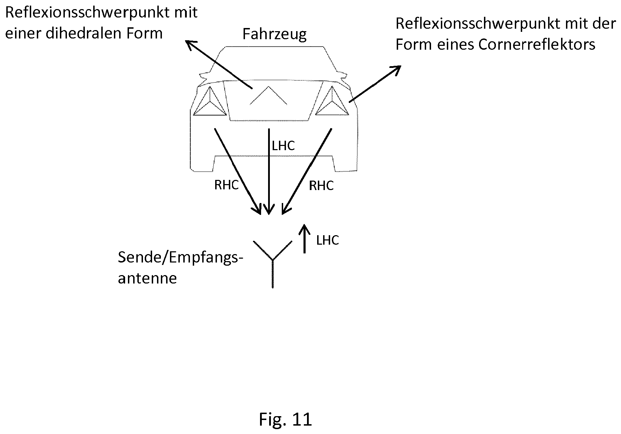

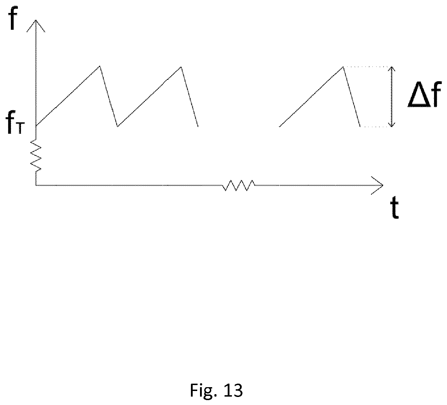

Es ist somit ein polarimetrisches Radar angegeben, das zumindest aus einer Sendeanordnung besteht, die zirkular polarisierte Wellen über Sendeantennen abstrahlt und einer Empfängeranordnung, die die reflektierten zirkular polarisierten Wellenanteile über eine Antennenanordnung empfängt, wobei mehrere Zweikanalempfänger als Empfängeranordnung vorgesehen sind, die gleichzeitig links- und rechtsdrehende, zirkular polarisierte Signalanteile empfangen, die für eine der Antennenanordnung nachgeschaltete digitale Strahlformung vorgesehen sind. Dabei ergeben sich durch die Auswertung der Amplitude und der Phase von den empfangenen rechts- und linkszirkular polarisierten Signalanteilen und deren verhältnismäßige Verteilung zueinander Rückschlüsse auf die Struktur der detektierten Objekte, wobei Figur 11 den Grundgedanken zeigt. Eine z.B. linkszirkular polarisierte Welle wird abgestrahlt. Am Objekt wird die Welle von den Rückstrahlzentren mit einer geraden Anzahl von Totalreflexionen als linkszirkular polarisierte Welle zurück reflektiert. Von den Rückstrahlzentren mit einer ungeraden Anzahl von Totalreflexionen wird die Welle als rechtszirkular polarisierte Welle reflektiert. Wird die abgestrahlte Welle in der Frequenz mit einem entsprechend hohen Frequenzhub moduliert (siehe Figur 13,) dann ist es möglich eine entsprechend hohe Ortsauflösung am Objekt zu erzielen und über die Art der Rückstreuzentren, d. h. Polarisationsrichtung wird geändert oder nicht, das Objekt eindeutig zu klassifizieren.

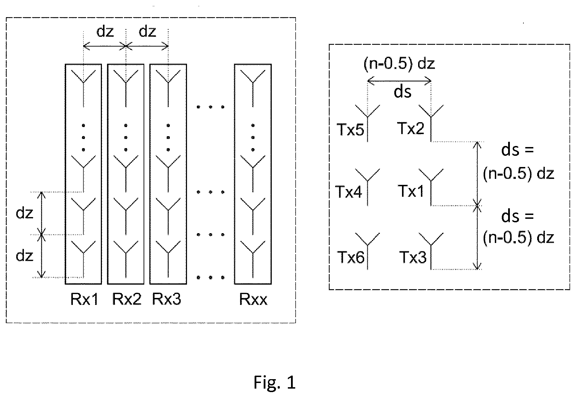

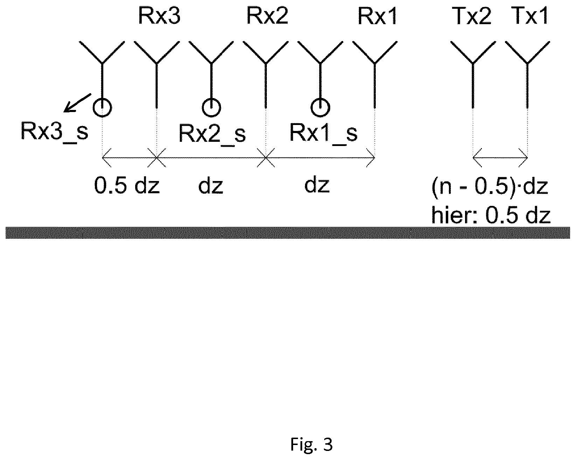

Die Sendeanordnung besteht in horizontaler und vertikaler Richtung aus mehreren Sendern entsprechend Figur 1 , deren Phasenzentrumsabstände (ds) abhängig vom Phasenzentrumsabstand der Antenneneinzelelemente des Empfängers (dz) so gewählt werden, dass mittels Halbzeilen-Sendeortumschaltung periodisch wiederkehrende Hauptkeulen (sog. Grating-Lobes) durch Addition der Signale der realen und synthetischen Empfänger entsprechend Figur 3 unterdrückt werden. Die Unterdrückung der periodisch wiederkehrenden Hauptkeulen (sog. Grating-Lobes) ermöglicht dabei eine exakte Winkelbestimmung der detektierten Objekte. Wenn es möglich wäre die Antennenzeilen in ungefähr einem Abstand der halben Wellenlänge der Sendefrequenz, d.h. bei 76 GHz ca. 2 mm, anzuordnen, dann würden"grating lobes" nicht entstehen. Dieser geringe Abstand würde dazu führen, dass es zu Überkopplungen zwischen den Antennezeilen kommt und eine ausreichende Entkopplung zwischen kopolarer und kreuzpolarer Welle nicht mehr erreicht werden kann.

Vorteilhafte Weiterbildungen sind in den Unteransprüchen angegeben.

Gemäß vorteilhafter Ausgestaltung verfügt jedes Antennenelement (bzw. Gruppen von Antennenelementen) der Empfangsantenne über einen separaten Empfangskanal für auf das Sendesignal bezogene kopolare Empfangssignale und für auf das Sendesignal bezogene kreuzpolare Empfangssignale, um digitale Strahlschwenkung in vertikaler und horizontaler Richtung durchführen zu können.

Desweiteren ermöglicht die Verwendung von mindestens 4 Sendeantennen Halbzeilen- Sendeortumschaltung in vertikaler und horizontaler Richtung. Die genannte Ausführung der digitalen Strahlschwenkung und Halbzeilen-Sendeortumschaltung ermöglicht die exakte Winkelbestimmung der detektierten Objekte bei Strahlformung und somit Strahlschwenkung sowohl in vertikaler als auch in horizontaler Richtung. Mit der vorteilhaften Ausgestaltung ist es durch digitale Strahlformung in Azimuth und Elevation möglich ein zweidimensional scannendes Radar zu realisieren.

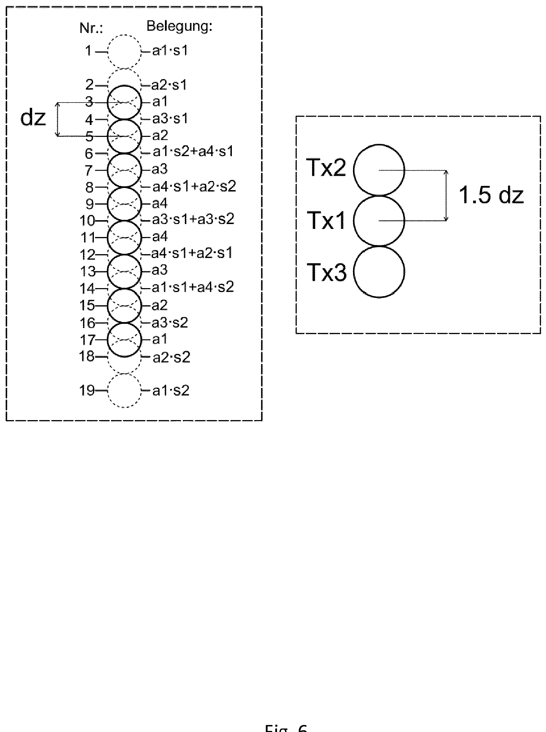

Gemäß vorteilhafter Ausgestaltung weist die Empfängeranordnung vertikale Empfangszeilen auf, dessen Empfangsnetzwerk so ausgelegt ist, dass die vertikalen Empfangszeilen, die aus dem realen und dem durch Halbzeilen-Sendeortumschaltung erzeugten synthetischen Anteil bestehen, ein geringes Nebenkeulenniveau mittels Amplitudenüberlagerung und Amplituden-Multiplikationsfaktoren der synthetischen Zeilen entsprechend Figur 6 aufweisen. Das für ein geringes vertikales Nebenkeulenniveau ausgelegte vertikale Empfangsnetzwerk ermöglicht die exakte Winkelbestimmung der detektierten Objekte in vertikaler Richtung.

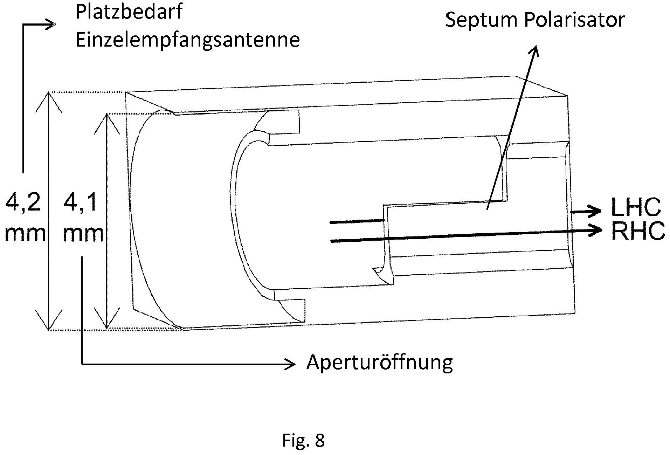

Gemäß vorteilhafter Ausgestaltung entkoppelt jede Sende- und Empfangsantenne rechts- und linkszirkular polarisierte Wellen, vorzugsweise jedoch mit gemeinsamem Phasenzentrum und vorzugsweise mit integralem Septumpolarisator bei Verwendung axial aufgebauter Rillenhörner entsprechend Figur 8. Die hinreichende Entkopplung von rechts- und linkszirkularen Wellen ist eine Voraussetzung für die Polarisationsauswertung, wobei ein gemeinsames Phasenzentrum die Komplexität des Auswertealgorithmus deutlich vereinfacht. Der Septumpolarisator steht für eine vorteilhafte Ausführungsform wenn ein Hohlleiter Hornantennenarray zum Einsatz kommt. Bei planaren Antennen kommen andere Ausführungsformen zum Einsatz.

Gemäß vorteilhafter Ausgestaltung weist der Abstand zwischen zwei Phasenzentren der Einzelempfangsantennen (dz) der Empfängeranordnung einen Wert auf, der zwischen der Wellenlänge und der 1,25-fachen Wellenlänge der Trägerfrequenz der ausgestrahlten Welle des Radarsystems liegt. Damit gewährleistet die geometrische Anordnung der Empfangsantennen eine vorteilhafte Verwendung von Halbzeilen-Sendeortumschaltung. Idealerweise ergibt sich somit ein Abstand zwischen der realen und der synthetischen Antennenzeile von der halben Wellenlänge bezogen auf die Sendefrequenz.

Gemäß vorteilhafter Ausgestaltung weist die Sendeantennen eine für Halbzeilen-Sendeortumschaltung kompatible Aperturgröße auf, deren 3 dB-Keulenbreite beim Sendevorgang den Scanbereich des Radarempfängers abdeckt. Somit kann die Sendeantenne für Halbzeilen-Sendeortumschaltung und der Scanbereich des Radarempfängers im vollen Umfang zur Zieldetektion verwendet werden.

Gemäß vorteilhafter Ausgestaltung besteht die Sendeanordnung aus 6 Sendeantennen, und zwar mit vorzugsweise zwei benachbarten horizontal angeordneten Sendeantennen, die vertikal dreifach angeordnet sind, wobei benachbarte Sendeantennen einen Abstand ds aufweisen, der das (n-0,5) -fache des Abstandes dz des Phasenzentrums der Einzelempfangsantennen und n gleich ganzzahlig ist. Durch die Sendeanordnung wird Halbzeilen-Sendeortumschaltung in horizontale und in vertikale Richtung ermöglicht, wobei die 3 vertikalen Sender bei Verwendung von vertikalen Empfangszeilen ein geringes vertikales Nebenkeulenniveau durch die obig genannte Auslegung des Empfangsnetzwerks ermöglichen.

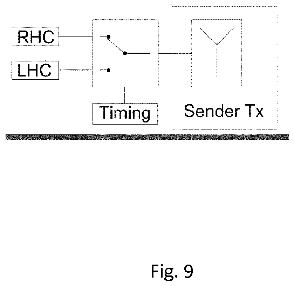

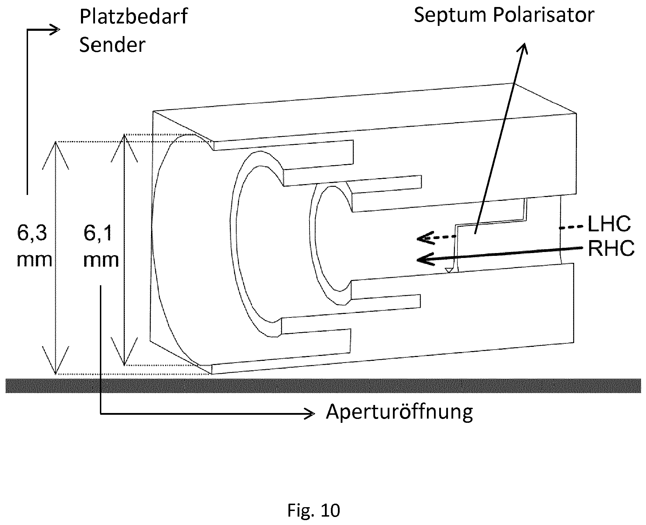

Gemäß vorteilhafter Ausgestaltung kann jeder Sender umschaltbar sowohl eine links- als auch rechtszirkular polarisierte Welle entsprechend Figur 9 abstrahlen, vorzugsweise für eine hohe Entkopplung der Polarisationsrichtungen unter Verwendung eines Septumpolarisators bei Verwendung eines axial aufgebauten Rillenhorns entsprechend Figur 10. Die Umschaltbarkeit der Sender zwischen den Polarisationsrichtungen ermöglicht einen zusätzlichen Informationsgewinn bei der Auswertung der Empfangssignale. Indem abwechselnd links- und dann rechtszirkular polarisierte Welle gesendet und gleichzeitig die links- und rechtszirkular polarisierte Welle empfangen wird ist es möglich die vollständige Müller Matrix aufzustellen.

Zweckmäßigerweise erfolgt die Objektklassifizierung, insbesondere unter Verwendung eines polarimetrischen Radars, durch ein Verfahren, welches folgende Schritte aufweist:

a) Bereitstellen einer Sendeanordnung, die zirkular polarisierte Wellen abstrahlt, und mehrere Zweikanalempfänger als Empfängeranordnung, die über eine Antennenanordnung nach dem Prinzip der digitalen Strahlformung die reflektierten elektromagnetischen Wellen empfangen, wobei sowohl die linksdrehenden als auch rechtsdrehenden zirkular polarisierten Wellenanteile gleichzeitig empfangen werden, und

b) Klassifikation der Objekte nach Art und Größe indem sowohl im Empfangskanal für links- als auch im Empfangskanal für rechtsdrehende zirkular polarisierte Empfangssignale die Lage der Reflexionsschwerpunkte der Objekte über Entfernungs- und Geschwindigkeits- Fourier-Transformationen bestimmt werden.

Durch das genannte Verfahren werden die Objektschwerpunkte, die vorwiegend eine Polarisationsdrehung bewirken und die Objektschwerpunkte, die vorwiegend keine Polarisationsdrehung bewirken, gleichzeitig in Amplitude, Relativgeschwindigkeit, Winkel und Polarisationseigenschaft erfasst.

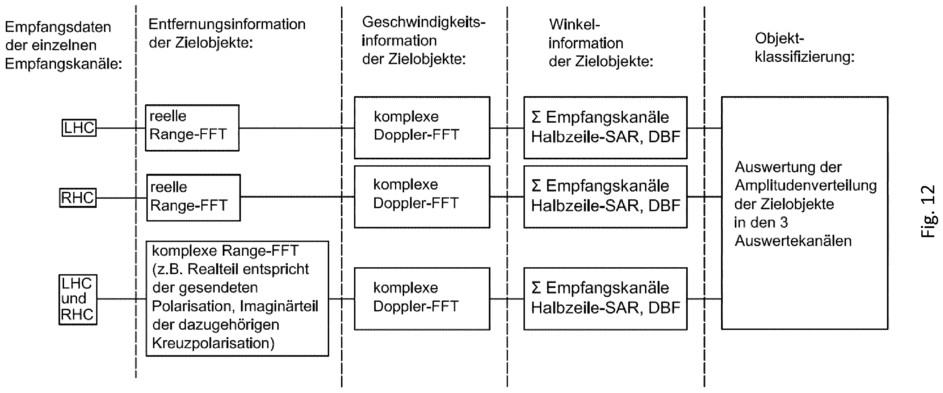

Gemäß vorteilhafter Ausgestaltung wird zur Bestimmung der Lage der Reflexionsschwerpunkte der Zielobjekte der auf das Sendesignal bezogenen kopolaren Empfangssignale und unabhängig davon zur Bestimmung der Lage der Reflexionsschwerpunkte der Zielobjekte der auf das Sendesignal bezogenen Kreuzpolaren-Empfangssignale jeweils eine Entfernungs- und Geschwindigkeits-Fourier-Transformation gerechnet und das Spektrum zur Objektklassifikation (entsprechend Fig. 12) ausgewertet. Durch die genannte vorteilhafte Ausgestaltung des Verfahrens wird die praktische Umsetzung beschrieben, um die Objektschwerpunkte nach der Eigenschaft einer Polarisationsdrehung oder nicht zu klassifizieren.

Gemäß vorteilhafter Ausgestaltung wird zur Bestimmung der Lage der Reflexionsschwerpunkte der Zielobjekte der auf das Sendesignal bezogenen kopolaren Empfangssignale gegenüber der Lage der Reflexionsschwerpunkte der Zielobjekte der auf das Sendesignal bezogenen kreuzpolaren Empfangssignale eine gemeinsame Entfernungs- und Geschwindigkeits- Fourier Transformation gerechnet und das Spektrum zur Objektklassifikation (entsprechend Fig. 12) ausgewertet. Durch die genannte vorteilhafte Ausgestaltung des Verfahrens wird die praktische Umsetzung beschrieben, um die relative Lage der Objektschwerpunkte mit der Eigenschaft einer Polarisationsdrehung gegenüber jenen mit keiner Polarisationsdrehung zu bestimmen.

Zweckmäßigerweise erfolgt die Bestimmung der Lage der Reflexionsschwerpunkte der Zielobjekte der auf das Sendesignal bezogenen kopolaren Empfangssignale gegenüber der Lage der Reflexionsschwerpunkte der Zielobjekte der auf das Sendesignal bezogenen kreuzpolaren Empfangssignale durch ein Verfahren, indem eine Entfernungs- und Geschwindigkeits- Fourier-Transformation über einen der beiden Empfangskanäle gerechnet wird, um grob die Entfernungstore der relevanten Objekte zu bestimmen und anschließend eine hochauflösende diskrete Entfernungs- und Geschwindigkeits- Fourier-Transformation für beide Empfangskanäle separat und für beide Empfangskanäle gemeinsam über die jeweiligen Entfernungstore mit den relevanten Objekten gerechnet wird und deren Spektren zur Objektklassifikation ausgewertet werden. Durch die genannte vorteilhafte Ausgestaltung des Verfahrens wird eine praktische Umsetzung mit Rechenzeitoptimierung beschrieben. Dabei wird als erster Schritt das Entfernungstor mit der Lage des gesamten Objekts mit Hilfe einer FFT niedriger Auflösung bestimmt. Anschließend wird nur für dieses Entfernungstor eine hochauflösende DFT für den Empfangskanal für linkszirkulare Signale und parallel für den Empfangskanal für rechtszirkulare Signale und parallel für beide Kanäle zusammen gerechnet um das Objekt klassifizieren zu können.

Gemäß vorteilhafter Ausgestaltung wird der erfindungsgemäße Radarsensor in eine sich bewegende Basis eingebaut, vorzugsweise eines Automobils, vorzugsweise bei Verwendung der für Automobilanwendungen zugelassenen Sendefrequenz im Frequenzbereich von 76 GHz bis 81 GHz, vorzugsweise durch Aussenden eines frequenzmodulierten Dauerstrichsignals. Der anmeldungsgemäße Gegenstand kommt immer dann zur Anwendung, wenn die physikalischen Umrisse des zu detektierenden Objekts erkannt werden müssen. Die sind bei Automobilanwendungen Fahrzeuge und Fahrzeugklassen (PKW, LKW, Motorrad, Fahrrad), Personen und Falschziele (Brückengeländern, Gullys, Leitplanken, usw.). Bei Flugzeuganwendung z.B. beim Taxiing am Flughafen andere Objekte wie Flugzeuge, Versorgungsfahrzeuge, Personen und Falschziele wie z.B. Positionslichter in der Landebahn.

**Funktionsbeschreibung**

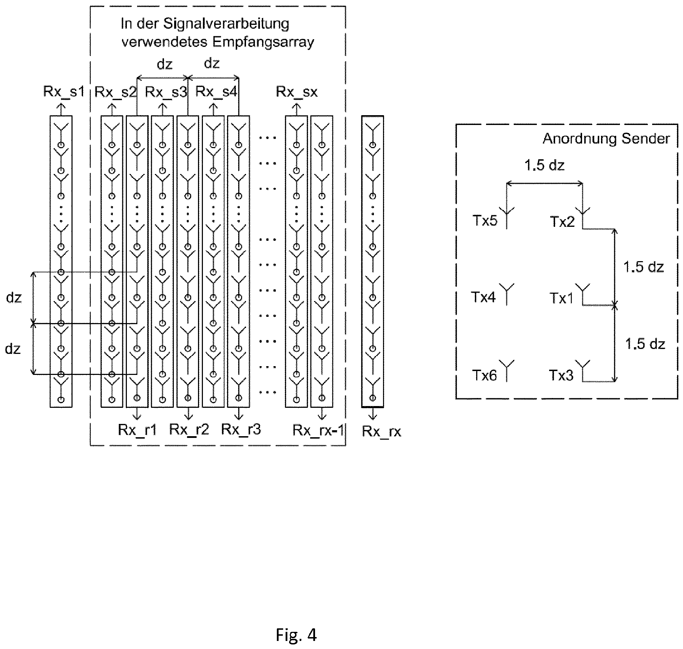

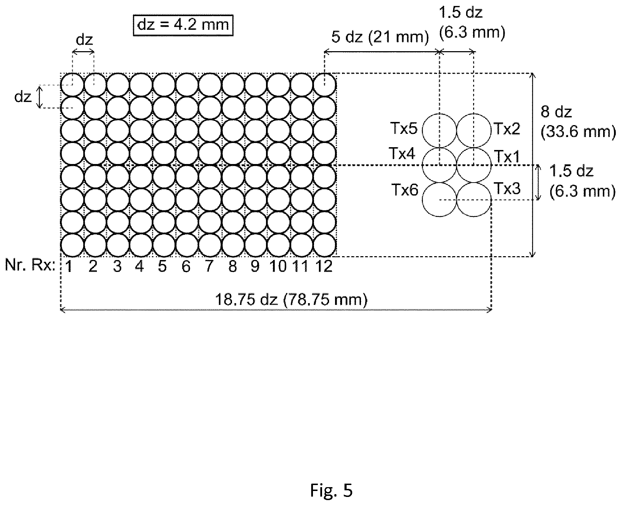

Das polarimetrische Radar mit digitaler Strahlformung zur Objektklassifikation verwendet zirkulare Polarisation bei der für Automobilanwendungen zugelassenen Trägerfrequenz von 76 bis 81 GHz. Ausgewertet werden sowohl die rechtsdrehenden als auch die linksdrehenden zirkularen Signalanteile, die am Objekt reflektiert werden. Empfängerseitige digitale Strahlformung wird zur geometrischen Winkelauflösung der Empfangsdaten verwendet. Dieses Prinzip wird angewandt, um das vollständige Radarbild aus einer Messung, für einen festen Zeitpunkt berechnen zu können. Der Nachteil, dass sich die Größe der einzelnen Radarrückstreuquerschnitte wie z.B. bei mechanisch oder elektronisch scannenden Systemen während des Scans verändert wird dadurch vermieden. Dies ist ein entscheidender Vorteil um eine zuverlässige polarimetrische Auswertung der Radarrückstreuquerschnitte des Objektes vornehmen zu können.

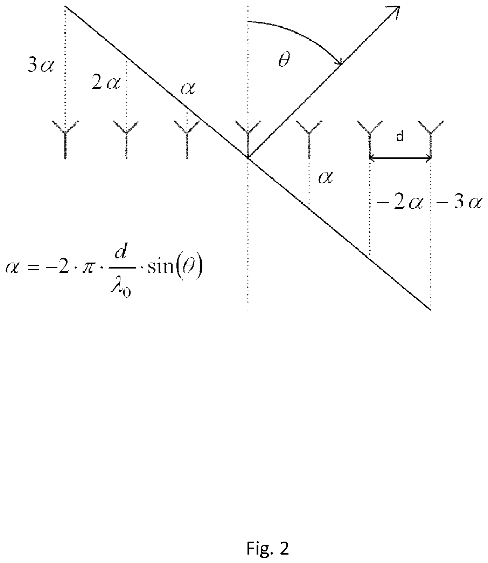

Fig. 1 zeigt die Anordnung der Sende- und Empfangsantenneneinheiten. Die Empfangseinheit besteht in horizontaler Richtung aus mehreren Empfangskanälen (Rx). Jeder Empfangskanal besteht aus Einzelstrahlern die vertikal über ein Speisenetzwerk miteinander verbunden sind. Diese Anordnung ermöglicht digitale Strahlformung in horizontaler Richtung. Bei diesem Prinzip werden die Empfangsdaten der einzelnen Empfangskanäle, die zu demselben Zeitpunkt detektiert werden, in der darauffolgenden digitalen Signalverarbeitung mit einer Amplitudenbelegung multipliziert, mit einem Phasenanteil beaufschlagt und anschließend summiert, so dass die Richtung der Hauptkeule des Gesamtarrays geschwenkt werden kann. Fig. 2 zeigt die Abhängigkeit zwischen Schwenkwinkel und Phasenanteilen, die zu den einzelnen Phasen der Empfangskanäle addiert werden. Diese sind außerdem abhängig vom Abstand zwischen den Empfängern und der Wellenlänge der Trägerfrequenz.
Der zugelassene Frequenzbereich für Automobilanwendungen liegt zwischen 76 GHz und 81 GHz, d.h. die Wellenlänge beträgt ca. 4 mm. Zur Vermeidung von "grating lobes" sollte laut Antennentheorie der horizontale Abstand der Empfangsantennen bei der halben Wellenlänge von ca. 2 mm liegen. In der Praxis ist es jedoch nicht möglich die Empfangsantennen derart eng anzuordnen. Es kommt dadurch zu Überkopplungen und die erforderliche Isolation zwischen der Kopolaren und Kreuzpolaren von mindestens 20 dB, um die polarimetrische Zielklassifikation durchführen zu können, geht verloren. Anmeldungsgemäß kann durch einen größeren Abstand der Empfangsantennen das Entstehen von "grating lobes" durch Halbzeilen- Sendeortumschaltung vermieden werden. Beim Halbzeilen-Sendeortumschaltung wird abwechselnd mit 2 örtlich versetzten Sendern gesendet und mit dem identischen Empfangsarray empfangen. Der örtliche Versatz der Sender wird dabei so gewählt, dass damit die Empfangsantennen virtuell und zwar mittig zwischen den Empfangsantennen des realen Empfangsarrays liegen. Durch Addition der Messungen mit dem ersten und zweiten Sender beim Formen des digitalen Strahls wird dann wieder die Bedingung der halben Wellenlänge zwischen den Empfangsantennen erfüllt und das Entstehen von "grating lobes" verhindert.
Neben dem Empfangsarray zeigt Fig. 1 auch eine Anordnung von 6 Sendeantennen. Durch die Verwendung von mehreren Sendern, die einen Abstand von ds gleich (n-0.5)*dz besitzen, wobei "ds" für die vertikalen und horizontalen Abstände der Phasenzentren der Sender und "dz" für die vertikalen und horizontalen Abstände der Phasenzentren der Einzelstrahler des Empfängers steht und "n" eine natürliche möglichst kleine Zahl ist, kann Halbzeilen- Sendeortumschaltung durch zeitliche Sendeortumschaltung realisiert werden. Fig. 3 zeigt beispielshaft dieses Prinzip für 2 Sender. Die Sender werden abwechselnd verwendet und der Abstand zwischen den Sendern wird auf das Empfangsarray abgebildet, so dass sich ein synthetisches Empfangsarray ergibt, das um den Senderabstand zu dem realen Empfangsarray verschoben ist. Durch den obig genannten formelmäßigen Zusammenhang der Senderabstände liegen die synthetischen Empfänger zwischen den realen Empfängern und man erhält eine Halbierung der Empfängerabstände, die zur Vermeidung von störenden "grating lobes" (sich periodisch wiederholende Hauptkeulen) und zur Realisierung großer Schwenkwinkel mittels digitaler Strahlformung ungefähr die halbe Wellenlänge der Trägerfrequenz des Radarsystems aufweisen sollen. Wenn dabei der Parameter "n" größer als 1 wird, entsteht am Rand des Empfangsarrays keine Abstandshalbierungen. Da diese Lücken am Rand des Antennenarrays Nebenkeulen verursachen, werden die entsprechenden Kanäle zur digitalen Strahlformung nicht berücksichtigt.
Durch Halbzeilen- Sendeortumschaltung werden die Abstände der Phasenzentren der realen Empfangsantennen bei gleicher Performance verdoppelt. Der dadurch erzielte Platzgewinn ist für die fertigungstechnische Realisierbarkeit von komplexen Antennen vorteilhaft. Bei der Bildung des Gesamtarrays muss die Veränderung der Phase bei Signallaufzeitveränderungen durch Objektbewegungen relativ zum Radarsensor während des Sendevorgangs korrigiert werden. Damit Halbzeilen-Sendeortumschaltung auch für Objekte mit kleineren und mittleren Entfernungen verwendbar ist, müssen die Sende- und Empfangseinheit nahe beieinander angeordnet sein.
Die mehrfache Verwendung von Halbzeilen-Sendeortumschaltung in horizontaler und vertikaler Richtung für die Anordnung aus Fig.1 zeigt Fig. 4. Aus Platzgründen haben die 6 Sender dabei einen Abstand der Phasenzentren von 1.5-mal dem Abstand der Phasenzentren der Einzelempfangsantennen. Im Empfangsarray entstehen somit Lücken am Arrayrand, an der keine Halbierung des Abstandes der Empfangszeilen stattfindet. Gemäß obiger Beschreibung werden die äußere synthetische Empfangszeile und die äußere reale Empfangszeile somit nicht in der digitalen Strahlformung berücksichtigt. Die Übertragung der Sende- und Empfangsanordnung mit 12 realen Empfangszeilen in einem Layout, das den Platzbedarf der verwendeten Rillenhornantennen durch Kreise darstellt, zeigt Fig. 5. Die Abstände bei den Sendern und Empfängern sind dabei so gewählt, dass man mittels digitaler Strahlformung einen Winkelbereich von ungefähr +/- 45° abdecken kann. Die Anzahl von z.B. 12 Empfangszeilen führt zu einer 3 dB-Beambreite von ca. 8°.

Das Speisenetzwerk für eine reale Empfangszeile, die symmetrisch aufgebaut ist, muss dabei hardwaremäßig so ausgelegt werden, dass die Amplitudenbelegung der gesamten Empfangszeile, die aus den realen und synthetischen Einzelempfangsantennen besteht, eine hohe Nebenkeulenunterdrückung gewährleistet. Die synthetischen Einzelempfangsantennen werden dadurch erzeugt, dass mittels Halbzeilen-Sendeortumschaltung mit 3 Sendern die reale Empfangszeile um den 1.5-fachen Abstand der Phasenzentren der Einzelempfangsantennen nach oben und nach unten verschoben wird. Dabei überlagern sich an bestimmten Positionen die synthetischen Einzelempfangsantennen, so dass die entsprechenden Amplitudenbelegungskoeffizienten und Multiplikationsfaktoren für die synthetischen Empfangszeilen entstehen, die in Fig. 6 dargestellt sind.

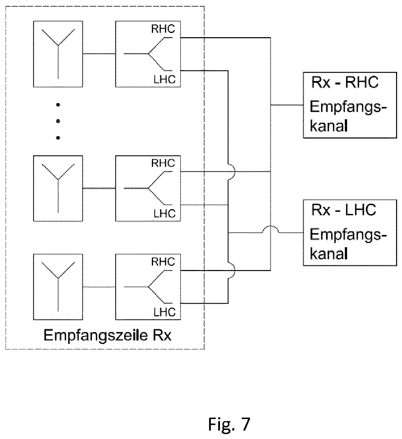

Die Empfangsantennen müssen dabei gleichzeitig die rechtsdrehenden und die linksdrehenden zirkular polarisierten Signalanteile empfangen. Gemäß Fig. 7 ergeben sich für eine Empfangszeile für die beiden Polarisationsrichtungen zwei Empfangskanäle. Die Anforderung besteht dabei in einer hohen Entkopplung zwischen ko- und kreuzpolaren Signalanteilen. Dies wird erreicht durch den in Figur 8 gezeigten Rillenhornstrahler mit Septum Polarisator. Gemäß Fig. 5 beträgt der Platzbedarf für einen Empfänger 4,2 mm. Dieser Wert liegt ungefähr bei der Wellenlänge der Trägerfrequenz von 76 bis 77 GHz, die ca. 3,9 mm beträgt. Der Durchmesser der Aperturöffnung wird auf 4,1 mm ausgelegt. Erfindungsgemäß besitzt der Septumpolarisator die Eigenschaft des gemeinsamen Phasenzentrums für den Empfangskanal für links- und für den Empfangskanal für rechtsdrehende zirkular polarisierte Empfangssignale. Dies ist eine entscheidende Voraussetzung für die polarimetrische Objektklassifikation.

Beim Sendevorgang wird nur eine linksdrehende oder rechtsdrehende oder zeitlich alternierend rechts- oder linksdrehende zirkular polarisierte Welle abgestrahlt (Fig. 9). Hier eignet sich wiederum ein Rillenhornstrahler, der gemäß Fig. 10 einen Platzbedarf von 6,3 mm aufweist und für einen Durchmesser der Aperturöffnung von 6,1 mm ausgelegt ist. Die Größe der Aperturöffnung muss so gewählt werden, dass die Hauptkeule des Senders, den Scanbereich des Radars abdeckt.

Am Zielobjekt wird die Polarisation je nach Oberflächenstruktur des Objekts verändert. Dabei können größere Zielobjekte in mehrere Einzelziele zerlegt werden, wie z.B. stark vereinfacht bei einem Fahrzeug in Fig. 11 gezeigt. Die Veränderung der Polarisationsrichtung wird dabei von folgenden Eigenschaften des Objekts bestimmt: Symmetriewinkel, Orientierungswinkel zur einstrahlenden Welle, Anzahl der Reflexionen im Objekt und Polarisierbarkeitswinkel. Letzteres ist ein Maß dafür wie stark ein Objekt eine unpolarisierte elektromagnetische Welle polarisieren kann. Wie in Fig. 11 gezeigt, entscheidet die Beschaffenheit des Reflexionsschwerpunktes, ob zum Beispiel eine zirkular linksdrehende Welle an einem Reflexionsschwerpunkt am Objekt, das beispielhaft vereinfacht dargestellt ausschließlich Totalreflexionen beinhaltet, als zirkular linksdrehende oder zirkular rechtsdrehende Welle reflektiert und damit empfangen wird. Da eine zirkulare Welle durch Totalreflexion die Drehrichtung ändert, entsteht folgende Situation:

- Reflexionsschwerpunkte des Objekts mit einer geraden Anzahl an Totalreflexionen bewirken keine Änderung der Drehrichtung zwischen empfangenem und gesendetem Signal, z.B. Dihedral

- Reflexionsschwerpunkte mit einer ungeraden Anzahl an Totalreflexionen bewirken eine Änderung der Drehrichtung zwischen empfangenem und gesendetem Signal, z.B. Cornerreflektor.

Durch die geometrische Darstellung des Objektes aus Reflexionsschwerpunkten mit einer geradzahligen und einer ungeradzahligen Anzahl an Totalreflexionen ist es zum Beispiel möglich die physikalischen Abmaße des Objektes und somit die Art bzw. Objektklasse zu bestimmen.

Ein weiterer Schwerpunkt der Erfindung ist der Algorithmus zur Bestimmung der Reflexionsschwerpunkte des Ziels. Dazu wird das Sendesignal entsprechend Fig. 13 frequenzmoduliert (FMCW). Nach dem aus der Literatur bekannten FMCW Prinzip erhält man dann im Empfangssignal entsprechend der Höhe des Frequenzhubs des Sendesignals und nach Berechnung der Fourier-Transformation (Range-Fourier-Transformation) sogenannte Entfernungstore mit folgender Entfernungsauflösung:

$$\text{Entfernungsauflösung} = \text{Lichtgeschwindigkeit} / (2 \text{ mal Frequenzhub})$$

und nach einer weiteren Berechnung einer schnellen Fourier-Transformation (FFT) über mehrere Frequenzrampen (Doppler-FFT) die Geschwindigkeitsinformation der Objekte in den einzelnen Entfernungstoren. Gemäß Fig. 12 wird hierbei parallel die Entfernungs- und Geschwindigkeits-FFT für den Empfangskanal für links- und rechtsdrehende Empfangssignale gerechnet, d.h. die Reflexionsschwerpunkte mit gerader Anzahl an Totalreflexionen erscheinen im Spektrum des Kanals ohne Polarisationsdrehung und die mit ungerader Anzahl an Totalreflexionen erscheinen im Kanal mit Polarisationsdrehung. Aus dem Spektrum lässt sich dann jeweils der Abstand gleicher Polarisationsschwerpunkte bestimmen. Um zudem den Abstand zwischen den drehenden und nicht drehenden Polarisationsschwerpunkten bestimmen zu können, wird eine gemeinsame FFT doppelter Länge über beide Kanäle gerechnet. Dabei werden z.B. die Werte des nicht drehenden Kanals auf den Realteil der Eingangsfolge der FFT gesetzt und die Werte des drehenden Kanals auf den Imaginärteil. Die Klassifikation des Objektes erfolgt durch Auswertung der Spektralanteile der 3 mittels FFT berechneten Spektren.

Anstelle der Berechnung jeweils einer hochauflösenden FFT (linksdrehender- und rechtsdrehender- und Summenkanal) ist auch folgender Algorithmus möglich:

Die Entfernungs- und Geschwindigkeits- FFT werden mit niedriger Entfernungsauflösung (kleiner Frequenzhub) gerechnet. Wurde dann aufgrund des Rückstreuquerschnitts ein mögliches Objekt in einem Entfernungstor identifiziert, dann wird für dieses spezielle Entfernungstor eine hochauflösende DFT (diskrete Fouriertransformation) im drehenden- und im nicht drehenden- und im Summenkanal gerechnet, indem ein erneuter Sende- Empfangszyklus mit einem hohen Frequenzhub stattfindet. Die Objektklassifikation erfolgt wie oben angegeben.

## Figurenbeschreibung

Fig. 1 zeigt die Anordnung der Sende- und Empfangsantenneneinheit. Diese besteht aus 6 Sendern, die einen Abstand aufweisen, der das (n-0,5) -fache des Abstandes dz des Phasenzentrums der Einzelempfangsantennen ist, wobei n eine natürliche Zahl ist. Dabei befinden sich an zwei horizontalen Positionen jeweils 3 vertikal angeordnete Sender. Das Empfangsarray wird aus mehreren horizontal angeordneten Empfangskanälen gebildet, die in vertikaler Richtung aus Einzelempfangsantennen bestehen. Die Abstände von den Phasenzentren aller Einzelempfangsantennen entsprechen dem Parameter dz.

Darin bezeichnen:

Rx : Empfangskanal
Tx: Sender
ds: Abstand Phasenzentrum Sender
dz: Abstand Phasenzentrum Einzelempfangsantenne
n: Natürliche Zahl (1,2,3,...)

: Einzelelementantenne

Fig. 2 zeigt das Prinzip des Digital Beamformings (Digitale Strahlformung). Dabei wird jeder Empfänger mit einem zusätzlichen Phasenanteil beaufschlagt. Dessen Betrag ist abhängig von dem Schwenkwinkel, der geometrischen Anordnung des Empfängers, dem Abstand zwischen den Empfängern und der Wellenlänge der Trägerfrequenz des Radarsystems.

Darin bezeichnen:

Y : Empfänger
$\alpha$ : Phasenanteile
d : Abstand zwischen zwei Empfänger
$\theta$: Schwenkwinkel
$\lambda_0$ : Wellenlänge

Fig. 3 zeigt die Funktionsweise von Halbzeilen-Sendeortumschaltung. Dabei werden zwei Sender mit einem Abstand von (n-0,5) -fache des Abstandes dz des Phasenzentrums der realen Einzelempfangsantennen angeordnet, wobei n eine natürliche Zahl ist. Empfängerseitig entsteht somit ein Empfangsarray bestehend aus realen und synthetischen Empfängern, wobei sich Letzteres mit Ausnahme des Arrayrandes zwischen den realen Empfängern befindet.

Darin bezeichnen:

Rx: Reale Empfänger
Rx_s: Synthetischer Empfänger
Tx: Sender
dz: Abstand Phasenzentrum Einzelempfangsantenne
n : Natürliche Zahl (1,2,3,...)

Fig. 4 zeigt das Gesamtempfangsarray bestehend aus dem realen und synthetischen Anteil und die dazugehörigen 6 Sender, die einen Abstand von dem 1,5-fachen des Abstandes dz des Phasenzentrums der realen Einzelempfangsantennen aufweisen. Dabei wird jede reale und synthetische Einzelantenne symbolisch dargestellt und der in der Signalverarbeitung verwendete Teil des Empfangsarray umrandet.

Darin bezeichnen:

: Synthetische Einzelantenne

: Reale Einzelantenne

Tx: Sender
Rx: Empfangszeile
dz: Abstand Phasenzentrum Einzelempfangsantenne

Fig. 5 zeigt die Sende- und Empfangseinheit aus Fig. 4, wobei das Empfangsarray aus 12 Empfangskanälen besteht und wobei nur die realen Einzelantennen dargestellt sind und zwar deren Platzbedarf bei Verwendung von Rillenhornantennen. Der Abstand der Phasenzentren der Einzelantennen wird mit 4,2 mm angegeben. Die sich daraus ergebenden exakten Abstände für die Sende- und Empfangseinheit sind in Klammern in Millimetern aufgeführt.

Darin bezeichnen:

○: Platzbedarf für eine Einzelantenne (Rillenhornantenne)
dz: Abstand Phasenzentrum Einzelempfangsantenne
Tx: Sender
Rx: Empfangszeile

Fig. 6 zeigt die vertikale Amplitudenbelegung einer Empfangszeile bei Verwendung von 3 vertikalen Sendern gemäß Fig. 5. Dargestellt sind der Platzbedarf der realen Einzelempfangsantennen einer Empfangszeile, die jeweils verschobenen synthetischen Einzelempfangsantennen, die jeweiligen Amplitudenbelegungskoeffizienten jeder Einzelempfangsantenne und bei den synthetischen Antennen zusätzlich der Multiplikationsfaktor. Die Amplitudenbelegung der realen Einzelempfangsantennen ist dabei symmetrisch. Die Empfangszeile (links) besteht aus realen und synthetischen Hornstrahlern. Die Sendeeinheit besteht aus drei vertikalen Sendern.

Darin bezeichnen:

Tx: Sender
Rx : Empfangszeile
dz: Abstand Phasenzentrum Einzelempfangsantenne
a: Amplitudenbelegungskoeffizient der Einzelempfangsantenne
s: Multiplikationsfaktor einer synthetischen Empfangszeile
○ : Platzbedarf für eine reale Einzelantenne (Rillenhornantenne)

: Verschobene synthetische Einzelempfangsantenne

Fig. 7 zeigt die Empfangskanalstruktur einer Empfangszeile. Für jede Einzelantenne gibt es einen Empfangskanal für rechtszirkular polarisierte Signale und einen Empfangskanal für linkszirkular polarisierte Signale. Alle Empfangskanäle für rechtszirkular, sowie für linkszirkular polarisierte Signale sind dabei miteinander verbunden.

Darin bezeichnen:

RHC = Rechts zirkular polarisiert
LHC = Links zirkular polarisiert
Rx = Empfangszeile

Fig. 8 zeigt den Querschnitt einer Einzelempfangsantenne. Es handelt sich um einen axialen Rillenhornstrahler mit integralem Septumpolarisator für eine Frequenz von 76 bis 81 GHz. Der Platzbedarf der Einzelempfangsantenne beträgt in horizontaler und vertikaler Richtung 4,2 mm. Die Aperturöffnung ist mit 4,1 mm angegeben.

Fig. 9 zeigt die Sendekanalstruktur einer Sendeantenne. Der Sender wird entsprechend einer zeitlichen Abfolge mit einem rechtszirkular und einem linkszirkular polarisierten Signal gespeist.

Darin bezeichnen

RHC = Rechts zirkular polarisiert

LHC = links zirkular polarisiert
Timing = Zeitliche Abfolge desSchaltprozess

Fig. 10 zeigt den Querschnitt einer Sendeantenne. Es handelt sich um einen axialen Rillenhornstrahler mit integralem Septumpolarisator für eine Frequenz von 76 bis 81 GHz. Der Platzbedarf der Sendeantenne beträgt in horizontaler und vertikaler Richtung 6,3 mm. Die Aperturöffnung ist mit 6,1 mm angegeben.

Fig. 11 zeigt beispielhaft die Reflexionsschwerpunkte am Fahrzeug und bei Bestrahlung durch eine elektromagnetische linkszirkular polarisierte Welle deren Auswirkung auf die Polarisationsrichtung der Welle. Bei einem Reflexionsschwerpunkt, der die Form eines Corner-Reflektors aufweist, dreht sich die Polarisationsrichtung zur Kreuzpolaren, währenddessen ein Reflexionsschwerpunkt mit einer dihedralen Form keine Änderung der Polarisationsrichtung bewirkt.

Darin bezeichnen:

RHC = Rechts zirkular polarisiert
LHC = Links zirkular polarisiert

Fig. 12 zeigt die Signalverarbeitung des Polarimetrischen Radars. Dabei werden 3 parallel laufende Signalverarbeitungsalgorithmen dargestellt, die die Daten der Empfangskanäle für links- und rechts zirkular polarisierte Signale einzeln und kombiniert auswerten. Die Entfernungs-, Geschwindigkeits-, Winkel- und Objektklassenidentifizierungsinformation erhält man mittels der gezeigten Anordnung von reellen und komplexen Fourier-Transformationen, gewichteten Empfangskanaladditionen und Amplitudenverteilungsauswertungen nach den Prinzipien von Halbzeilen-Sendeortumschaltung und Digitaler Strahlformung.

Darin bezeichnen:

RHC: Rechts zirkular polarisiert
LHC: Links zirkular polarisiert
FFT: Fourier-Transformation
SAH: Sendeortumschaltung
DBF: Digitale Strahlformung/ Strahlschwenkung

Fig. 13 zeigt die Frequenzmodulation des Sendesignals über der Zeit. Die Begriffe Trägerfrequenz und Frequenzhub sind hierbei in der Grafik aufgeführt.

Darin bezeichnen:

f: Frequenz
t: Zeit
$f_T$: Trägerfrequenz
$\Delta f$: Frequenzhub

**Patentansprüche**

1. Polarimetrisches Radar bestehend aus einer Sendeanordnung, die zirkulär polarisierte Wellen über Sendeantennen abstrahlt, und einer Empfängeranordnung, die die reflektierten zirkulär polarisierten Wellen über eine Antennenanordnung empfängt, wobei die Empfängeranordnung Antenneneinzelelemente und reale Einzelempfangsantennen umfasst,

wobei mehrere Zweikanalempfänger als Empfängeranordnung vorgesehen sind, die gleichzeitig links- und rechtsdrehende, zirkulär polarisierte Signalanteile empfangen, die für eine der Antennenanordnung nachgeschaltete digitale Strahlformung vorgesehen sind,
**dadurch gekennzeichnet**
**dass** die Sendeanordnung mehrere Sender in horizontaler und vertikaler Richtung aufweist, deren Phasenzentrumsabstände abhängig vom Phasenzentrumsabstand der Antenneneinzelelemente des Empfängers so gewählt werden, dass mittels Halbzeilen-Sendeortumschaltung periodisch wiederkehrende Hauptkeulen unterdrückt werden, wobei zwei Sender der mehreren Sender mit einem Abstand von (n-0,5)-fache des Abstandes dz des Phasenzentrums der realen Einzelempfangsantennen angeordnet werden, wobei n eine natürliche Zahl ist.

**2.** Polarimetrisches Radar nach Anspruch 1, **dadurch gekennzeichnet, dass** für eine digitale Strahlschwenkung in vertikaler und horizontaler Richtung jedes Antennenelement (bzw. Gruppen von Antennenelementen) der Empfangsantenne über einen separaten Empfangskanal für auf das Sendesignal bezogene kopolare Empfangssignale und für auf das Sendesignal bezogene kreuzpolare Empfangssignale verfügt und sowohl in vertikaler als auch horizontaler Richtung Halbzeilen- Sendeortumschaltung realisiert wird durch die Verwendung von mindestens 4 Sendeantennen.

**3.** Polarimetrisches Radar nach Anspruch 1 bis 2, **dadurch gekennzeichnet, dass** die Empfängeranordnung vertikale Empfangszeilen aufweist und das Empfangsnetzwerk der vertikalen Empfangszeilen so ausgelegt ist, dass die vertikalen Empfangszeilen, die aus dem realen und dem durch Halbzeilen- Sendeortumschaltung erzeugten synthetischen Anteil bestehen, ein geringes Nebenkeulenniveau mittels Amplitudenüberlagerung und Amplituden- Multiplikationsfaktoren der synthetischen Zeilen aufweisen.

**4.** Polarimetrisches Radar nach Anspruch 1 bis 3, **dadurch gekennzeichnet, dass** jede Sende- und Empfangsantenne rechts- und linkszirkular polarisierte Wellen entkoppelt, vorzugsweise jedoch mit gemeinsamem Phasenzentrum und vorzugsweise mit integralem Septumpolarisator bei Verwendung axial aufgebauter Rillenhörner.

**5.** Polarimetrisches Radar nach Anspruch 1 bis 4, **dadurch gekennzeichnet, dass** der Abstand zwischen zwei Phasenzentren von Einzelempfangsantennen der Empfängeranordnung einen Wert aufweist, der zwischen der Wellenlänge und der 1,25-fachen Wellenlänge der Trägerfrequenz der ausgestrahlten Welle des Radarsystems liegt.

**6.** Polarimetrisches Radar nach Anspruch 1 bis 5, **dadurch gekennzeichnet, dass** die Sendeantennen eine für Halbzeilen-Sendeortumschaltung kompatible Aperturgröße aufweisen, deren Keulenbreite, vorzugsweise 3 dB-Keulenbreite, beim Sendevorgang den Scanbereich des Radarempfängers abdeckt.

**7.** Polarimetrisches Radar nach einem der Ansprüche 1 bis 6, **dadurch gekennzeichnet, dass** die Sendeanordnung aus 6 Sendeantennen besteht, und zwar mit vorzugsweise zwei benachbarten horizontal angeordneten Sendeantennen, die vertikal dreifach angeordnet sind.

**8.** Polarimetrisches Radar nach einem der Ansprüche 1 bis 7, **dadurch gekennzeichnet, dass** jeder der Sender umschaltbar sowohl eine links- als auch rechtszirkular polarisierte Welle abstrahlt, vorzugsweise für eine hohe Entkopplung der Polarisationsrichtungen unter Verwendung eines Septumpolarisators bei Verwendung eines axial aufgebauten Rillenhorns.

**9.** Verfahren zur Objektklassifikation, unter Verwendung eines polarimetrischen Radars nach einem der Ansprüche 1 bis 8, welches folgende Schritte aufweist:

a) Bereitstellen einer Sendeanordnung, die zirkulär polarisierte Wellen abstrahlt, und mehrerer Zweikanalempfänger als Empfängeranordnung, die über eine Antennenanordnung nach dem Prinzip der digitalen Strahlformung die reflektierten elektromagnetischen Wellen empfangen, wobei sowohl die linksdrehenden als auch rechtsdrehenden zirkulär polarisierten Wellen gleichzeitig empfangen werden, und
b) Klassifikation der Objekte nach Art und Größe, indem sowohl im Empfangskanal für links- als auch im Empfangskanal für rechtsdrehende zirkulär polarisierte Empfangssignale die Lage der Reflexionsschwerpunkte der Objekte über Entfernungs- und Geschwindigkeits-Fourier-Transformationen bestimmt werden.

**10.** Verfahren nach Anspruch 9, **dadurch gekennzeichnet, dass** zur Bestimmung der Lage der Reflexionsschwerpunkte der Zielobjekte der auf das Sendesignal bezogenen kopolaren Empfangssignale und unabhängig davon zur Bestimmung der Lage der Reflexionsschwerpunkte der Zielobjekte der auf das Sendesignal bezogenen Kreuzpolaren-Empfangssignale jeweils eine Entfernungs- und Geschwindigkeits-Fourier-Transformation gerechnet und das Spektrum zur Objektklassifikation ausgewertet wird.

**11.** Verfahren nach Anspruch 9 und 10, **dadurch gekennzeichnet, dass** zur Bestimmung der Lage der Reflexionsschwerpunkte der Zielobjekte der auf das Sendesignal bezogenen kopolaren Empfangssignale gegenüber der Lage der Reflexionsschwerpunkte der Zielobjekte der auf das Sendesignal bezogenen kreuzpolaren Empfangssignale eine gemeinsame Entfernungs- und Geschwindigkeits-Fourier Transformation gerechnet wird und das Spektrum zur Objektklassifikation ausgewertet wird.

**12.** Verfahren nach Anspruch 9 bis 11, **dadurch gekennzeichnet, dass** zur Bestimmung der Lage der Reflexionsschwerpunkte der Zielobjekte der auf das Sendesignal bezogenen kopolaren Empfangssignale gegenüber der Lage der Reflexionsschwerpunkte der Zielobjekte der auf das Sendesignal bezogenen kreuzpolaren Empfangssignale eine Entfernungs- und Geschwindigkeits-Fourier-Transformation über einen der beiden Empfangskanäle gerechnet wird, um grob die Entfernungstore der relevanten Objekte zu bestimmen und anschließend eine hochauflösende diskrete Entfernungs- und Geschwindigkeits-Fourier-Transformation für beide Empfangskanäle separat und für beide Empfangskanäle gemeinsam über die jeweiligen Entfernungstore mit den relevanten Objekten gerechnet wird und deren Spektren zur Objektklassifikation ausgewertet werden.

13. Verwendung des polarimetrischen Radars nach einem der Ansprüche 1 bis 8 für die Objektbestimmung, vorzugsweise bei Einbau in einer sich bewegenden Basis, vorzugsweise eines Automobils, vorzugsweise bei der für Automobilanwendungen zugelassenen Sendefrequenz im Frequenzbereich von 76 GHz bis 81 GHz, vorzugsweise durch Aussenden eines frequenzmodulierten Dauerstrichsignals.

**Claims**

1. A polarimetric radar, comprising a transmission assembly that emits circularly polarized waves via transmission antennas, and a receiver assembly that receives the reflected circularly polarized waves using an antenna assembly, wherein the receiver assembly comprises individual antenna elements and real individual receiver antennas,

    wherein as the receiver assembly a plurality of two-channel receivers is provided, which simultaneously receive clockwise- and anticlockwise-rotating circularly polarized signal components which are provided for digital beam shaping downstream of the antenna assembly,
    **characterized in that**
    the transmission assembly comprises a plurality of transmitters in a horizontal direction and a vertical direction, the phase centre spacings of which are chosen dependent upon the phase centre spacing of the individual antenna elements of the receiver such that periodically recurring main lobes are suppressed by means of half-line transmission location changeover, wherein two transmitters of the plurality of transmitters are arranged at a spacing which is (n-0.5) times the spacing dz of the phase centre of the real individual receiver antennas, where n is a natural number.

2. The polarimetric radar according to Claim 1, **characterized in that** for digital beam steering in the vertical and the horizontal direction each individual antenna element (or groups of antenna elements) of the receiver assembly has a separate receiving channel for co-polar received signals relating to the transmitted signal and for cross-polar received signals relating to the transmitted signal, and half-line transmission location changeover is realized in both the vertical and in the horizontal direction by the use of at least 4 transmission antennas.

3. The polarimetric radar according to Claim 1 to 2, **characterized in that** the receiver assembly has vertical receiving lines and the receiving network formed by the vertical receiving lines is designed such that the vertical receiving lines, which consist of the real component and the synthetic component generated by half-line transmission location changeover, have a low level of sub-lobes by means of amplitude superposition and amplitude multiplication factors of the synthetic lines.

4. The polarimetric radar according to Claim 1 to 3, **characterized in that** each transmission and receiver antenna decouples right- and left-circularly polarized waves, but preferably with a common phase centre and preferably with an integral septum polarizer when axially constructed corrugated horns are used.

5. The polarimetric radar according to Claim 1 to 4, **characterized in that** the spacing between two phase centres of individual antennas elements of the receiver assembly has a value between the wavelength and 1.25 times the wavelength of the carrier frequency of an irradiated wave of the radar system.

6. The polarimetric radar according to Claim 1 to 5, **characterized in that** the transmission antennas have an aperture size compatible with half-line transmission location changeover, the lobe width of which, preferably the 3dB lobe width of which, covers the scanning range of the radar receiver during the transmission process.

7. The polarimetric radar according to any of Claims 1 to 6, **characterized in that** the transmission assembly consists of 6 transmission antennas, namely with preferably two adjacent horizontally arranged transmission antennas which are arranged vertically in groups of three.

8. The polarimetric radar according to any of Claims 1 to 7, **characterized in that** each of the transmitters emits, interchangeably, both a left- and a right-circularly polarized wave, preferably to achieve high decoupling of the polarization directions by using a septum polarizer when an axially constructed corrugated horn is used.

9. A method for object classification using a polarimetric radar according to any of Claims 1 to 8, comprising the following steps:

> a) providing a transmission assembly that emits circularly polarized electromagnetic waves, and a plurality of two-channel receivers as the receiver assembly, which receive reflected electromagnetic waves by means of an antenna assembly using digital beam shaping, both the clockwise-rotating and the anticlockwise-rotating circularly polarized wave components being received simultaneously and with a common phase centre, and
> b) classifying the objects according to type and size by the position of the reflection focal points of the objects being determined by range and speed Fourier transforms both in the receiving channel for anticlockwise- and in the receiving channel for clockwise-rotating circularly polarized received signals.

10. The method according to Claim 9, **characterized in that**, in order to determine the position of the reflection focal points of the target objects of the co-polar received signals relating to the transmitted signal, and in order to determine, independently thereof, the position of the reflection focal points of the target objects of the cross-polar received signals relating to the transmitted signal, a range and speed Fourier transform is calculated in each case and the spectrum is evaluated for the object classification.

11. The method according to Claim 9 and 10, **characterized in that** in order to determine the position of the reflection focal points of the target objects of the co-polar received signals relating to the transmitted signal with respect to the position of the reflection focal points of the target objects of the cross-polar received signals relating to the transmitted signal, a common range and speed Fourier transform is calculated and the spectrum is evaluated for object classification.

12. The method according to Claim 9 to 11, **characterized in that** in order to determine the position of the reflection focal points of the target objects of the co-polar received signals relating to the transmitted signal with respect to the position of the reflection focal points of the target objects of the cross-polar received signals relating to the transmitted signal, a range and speed Fourier transform is calculated by means of one of the two receiving channels in order to determine the approximate range gates of the relevant objects and then a high-resolution discrete range and speed Fourier transform is calculated for both receiving channels separately and for both receiving channels together by means of the respective range gates with the relevant objects, and their spectra are evaluated for object classification.

13. The use of the polarimetric radar according to any of Claims 1 to 8 for object determination, preferably while integrated into a moving base, preferably a car, preferably using the transmission frequency permitted for automotive applications in the frequency range of 76 GHz to 81 GHz, preferably by emitting a frequency-modulated continuous wave signal.

**Revendications**

1. Radar polarimétrique composé d'un système d'émission, qui émet des ondes à polarisation circulaire par des antennes émettrices et un système récepteur, qui reçoit par un système d'antennes les ondes réfléchies à polarisation circulaires, sachant que le système de réception comprend des éléments individuels d'antenne et des antennes de réception individuelles réelles,

> sachant que plusieurs récepteurs à deux canaux sont prévus en tant que système de réception, qui reçoivent simultanément des parties de signal à polarisation circulaire tournant à gauche et tournant à droite, qui sont prévus pour une formation de faisceau numérique connectée en aval du système d'antennes,
> **caractérisé en ce que**
> le système d'émission comporte plusieurs émetteurs en direction horizontale et verticale, dont les distances centrales entre phases en fonction de la distance centrale de phase des éléments individuels d'antenne du récepteur sont choisies de telle manière que les lobes principaux revenant périodiquement sont supprimés au moyen de l'inversion de lieu d'émission à demi-lignes, sachant que deux émetteurs des nombreux émetteurs sont disposés à une distance de (n-0,5) fois la distance 'dz' du centre de phase des antennes de réception individuelles réelles, sachant que « n » est un nombre naturel.

2. Radar polarimétrique selon la revendication 1, **caractérisé en ce que** pour un balayage de faisceau numérique en direction verticale et horizontale, chaque élément d'antenne (ou groupes d'éléments d'antenne) de l'antenne réceptrice dispose d'un canal de réception séparé pour les signaux de réception copolaires en référence au signal d'émission et pour les signaux de réception à polarisation croisée en référence au signal d'émission et une inversion de lieu d'émission à demi-lignes est réalisée tant en direction verticale qu'horizontale par l'utilisation d'au moins 4 antennes émettrices.

3. Radar polarimétrique selon l'une quelconque des revendications 1 à 2, **caractérisé en ce que** le système de réception comporte des lignes de réceptions verticales et le réseau de réception des lignes de réception verticales est conçu de telle manière que les lignes de réception verticales, qui sont composées de la partie réelle et synthétique produite par l'inversion de lieu d'émission à demi-lignes, comportent un niveau de lobe secondaire faible au moyen d'un chevauchement d'amplitudes et de facteurs de multiplication d'amplitudes des lignes synthétiques.

4. Radar polarimétrique selon l'une quelconque des revendications 1 à 3, **caractérisé en ce que** chaque antenne émettrice et réceptrice découpe les ondes à polarisation circulaire à droite et à gauche, de préférence toutefois avec un centre de phase commun et de préférence avec un polarisateur à septum intégral lors de l'utilisation de cornets rainurés à structure axiale.

5. Radar polarimétrique selon l'une quelconque des revendications 1 à 4, **caractérisé en ce que** la distance entre deux centres de phase d'antennes de réception individuelles du système de réception comporte une valeur qui se situe entre la longueur d'ondes et 1,25 fois la longueur d'ondes de la fréquence porteuse de l'onde émise du système radar.

6. Radar polarimétrique selon l'une quelconque des revendications 1 à 5, **caractérisé en ce que** les antennes émettrices comportent une taille d'ouverture compatible pour inversion d'émission à demi-lignes, dont la largeur de lobe, de préférence une largeur de lobe de 3dB, couvre lors de l'émission la gamme de balayage du récepteur radar.

7. Radar polarimétrique selon l'une quelconque des revendications 1 à 6, **caractérisé en ce que** le système d'émission est composé de 6 antennes émettrices et à savoir de préférence avec deux antennes émettrices voisines disposées horizontalement, qui sont disposées en trois fois verticalement.

8. Radar polarimétrique selon l'une quelconque des revendications 1 à 7, **caractérisé en ce que** chacun des émetteurs émet de façon réversible une onde à polarisation circulaire tant à gauche qu'à droite, de préférence pour un découplage élevé des directions de polarisation en utilisant un polarisateur à septum lors de l'utilisation d'un cornet rainuré à structure axiale.

9. Procédé de classification d'objets en utilisant un radar polarimétrique selon l'une quelconque des revendications 1 à 8, lequel comporte les étapes suivantes :

   a) préparation d'un système d'émission, qui émet des ondes à polarisation circulaire et de plusieurs récepteurs à deux canaux en tant que système de réception, qui reçoivent les ondes électromagnétiques réfléchies par un système d'antenne selon le principe de la formation de faisceau numérique, sachant que les ondes à polarisation circulaire tournant tant à gauche qu'à droite sont réceptionnées simultanément, et
   b) classification des objets selon le type et la taille, tant dans le canal de réception pour signaux de réception à polarisation circulaire tournant à gauche que dans le canal de réception pour signaux de réception à polarisation circulaire tournant à droite, la position des centres de gravité de réflexion des objets étant déterminée par des transformations de Fourier de distance et de vitesse.

10. Procédé selon la revendication 9, **caractérisé en ce qu'**une transformation de Fourier de distance et de vitesse est respectivement calculée pour déterminer la position des centres de gravité de réflexion des objets ciblés des signaux de réception copolaires en référence au signal d'émission et indépendamment de cela pour déterminer la position des centres de gravité de réflexion des objets ciblés des signaux de réception à polarisation croisée en référence au signal d'émission et le spectre est évalué pour la classification d'objets.

11. Procédé selon les revendications 9 et 10, **caractérisé en ce qu'**une transformation de Fourier de distance et de vitesse commune est calculée pour déterminer la position des centres de gravité de réflexion des objets ciblés des signaux de réception copolaires en référence au signal d'émission par rapport à la position des centres de gravité de réflexion des objets ciblés des signaux de réception à polarisation croisée en référence au signal d'émission et le spectre est évalué pour la classification d'objets.

**12.** Procédé selon l'une quelconque des revendications 9 à 11, **caractérisé en ce que** pour déterminer la position des centres de gravité de réflexion des objets ciblés des signaux de réception copolaires en référence au signal d'émission par rapport à la position des centres de gravité de réflexion des objets ciblés des signaux de réception à polarisation croisée en référence au signal d'émission, une transformation de Fourier de distance et de vitesse est calculée par le biais d'un des deux canaux de réception afin de déterminer grossièrement le portail de distance des objets appropriés et ensuite une transformation de Fourier de distance et de vitesse discrète à haute résolution est calculée pour les deux canaux de réception séparément et pour les deux canaux de réception en commun par le biais des portails de distance respectives avec les objets appropriés et les spectres de ceux-ci sont évalués pour la classification d'objets.

**13.** Utilisation d'un radar polarimétrique selon l'une quelconque des revendications 1 à 8, pour la détermination d'objets, de préférence lors du montage dans une base se déplaçant, de préférence d'une automobile, de préférence à la fréquence d'émission admise pour les applications automobiles dans une gamme de fréquences de 76 GHz à 81 GHz, de préférence par émission d'un signal à ondes continues à modulation de fréquence.

Fig. 1

$$\alpha = -2 \cdot \pi \cdot \frac{d}{\lambda_0} \cdot \sin(\theta)$$

Fig. 2

16

Fig. 3

Fig. 4

18

Fig. 5

Nr.:      Belegung:

1 — a1·s1

2 — a2·s1
3 — a1
4 — a3·s1
5 — a2
6 — a1·s2+a4·s1
7 — a3
8 — a4·s1+a2·s2
9 — a4
10 — a3·s1+a3·s2
11 — a4
12 — a4·s1+a2·s1
13 — a3
14 — a1·s1+a4·s2
15 — a2
16 — a3·s2
17 — a1
18 — a2·s2

19 — a1·s2

dz

Tx2
Tx1
Tx3

1.5 dz

Fig. 6

Fig. 7

Platzbedarf
Einzelempfangsantenne

Septum Polarisator

4,2 mm | 4,1 mm

LHC
RHC

Aperturöffnung

Fig. 8

Fig. 9

Fig. 10

Reflexionsschwerpunkt mit
einer dihedralen Form

Fahrzeug

Reflexionsschwerpunkt mit der
Form eines Cornerreflektors

LHC

RHC

RHC

LHC

Sende/Empfangs-
antenne

Fig. 11

Empfangsdaten der einzelnen Empfangskanäle:

Entfernungsinformation der Zielobjekte:

Geschwindigkeits-information der Zielobjekte:

Winkel-information der Zielobjekte:

Objekt-klassifizierung:

LHC und RHC

RHC

LHC

reelle Range-FFT

reelle Range-FFT

komplexe Range-FFT (z.B. Realteil entspricht der gesendeten Polarisation, Imaginärteil der dazugehörigen Kreuzpolarisation)

komplexe Doppler-FFT

komplexe Doppler-FFT

komplexe Doppler-FFT

Σ Empfangskanäle Halbzeile-SAR, DBF

Σ Empfangskanäle Halbzeile-SAR, DBF

Σ Empfangskanäle Halbzeile-SAR, DBF

Auswertung der Amplitudenverteilung der Zielobjekte in den 3 Auswertekanälen

Fig. 12

Fig. 13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2012274499 A1
- EP 2230533 A1
- US 2004178943 A1
- US 2011102238 A1
- US 2013278457 A1
- US 2008100510 A1

### In der Beschreibung aufgeführte Nicht-Patentliteratur

- **ALEXIS PAOLO GARCIA ARIZA et al.** 60 GHz Polarimetrie MIMO Sensing: Architectures and Technology. *6th European Conference on Antennas and Propagation,* 30. Marz 2012, 2578-2585

- **GUIMEI ZHENG et al.** Angle and polarization estimation using ESPRIT with polarimetric MIMO radar. *IET International Conference on Radar Systems,* 25. Oktober 2012, 1-4